# FASCICULE DE BREVET EUROPEEN

(11) **EP 4 077 126 B1**
(45) Date de publication et mention de la délivrance du brevet: **12.06.2024**
(21) Numéro de dépôt: 20821286.0
(22) Date de dépôt: 15.12.2020
(51) Int. Cl.: E05B 47/02, B64C 1/14, E05B 47/00

(54) **PORTE D'AÉRONEF À VERROU DE BLOCAGE DE SÉCURITÉ COMPORTANT UNE BIELLETTE À POLYMÈRE ÉLECTROACTIF**
FLUGZEUGTÜR MIT SICHERHEITSVERRIEGELUNG MIT ELEKTROAKTIVER POLYMERSTANGE
AIRCRAFT DOOR WITH SAFETY LOCKING SYSTEM FEATURING AN ELECTROACTIVE POLYMER CONNECTING ROD

(30) Priorité: 19.12.2019 FR 1914934; 19.12.2019 US 201962950164 P
(43) Date de publication de la demande: 26.10.2022
(73) Titulaire: Latecoere, 31500 Toulouse (FR)
(72) Inventeur: DEVILLEZ, Sébastien, 31240 SAINT JEAN OCCITANIE (FR); PRICE, Nicholas, SEATTLE, WA 98125 (US); WU, Jingyang, BEIJING 101312, SHUYI DISTRIC (CN); CHAN, Kenrick, BELLEVUE, WA 98006 (US); TRAN, Bac, HO CHI MINH CITY, DISTRICT 7 (VN); MARTINEZ, Wilson, KENT, WA 98031 (US)
(74) Mandataire: Junca, Eric
(86) Numéro de dépôt international: PCT/EP2020/086180
(87) Numéro de publication internationale: WO 2021/122567

(56) Documents cités:
- EP-A1- 3 321 174
- EP-A2- 0 321 994
- EP-A2- 0 321 994
- CN-A- 103 879 545
- JP-U- H0 587 186
- US-A1- 2008 120 911
- US-A1- 2009 230 700
- US-A1- 2019 233 079

## Description

### DOMAINE TECHNIQUE

L'invention concerne le domaine de l'aéronautique et vise plus particulièrement les moyens de blocage de sécurité d'une porte d'aéronef.

### ART ANTÉRIEUR

Les portes d'un aéronef comportent généralement un encadrement de porte et un ouvrant qui est adapté à occuper une position d'ouverture ou de fermeture grâce à un mécanisme d'ouverture/fermeture qui relie l'ouvrant à l'encadrement de porte. Le mécanisme d'ouverture/fermeture peut être actionné selon diverses modalités relatives à l'utilisation normale de la porte d'aéronef ou à l'ouverture de secours, en cas d'urgence, de la porte.

Dans certaines conditions, il est nécessaire d'empêcher l'ouverture d'une porte d'aéronef pour des raisons de sécurité. Des verrous de blocage de sécurité sont ainsi généralement prévus pour maintenir directement l'ouvrant dans sa position de fermeture, ou pour verrouiller le mécanisme d'ouverture/fermeture de sorte que l'ouverture de la porte ne puisse avoir lieu.

Dans les aéronefs munis de telles portes qui peuvent être bloquées par des verrous de sécurité, il est cependant nécessaire de s'assurer que l'ouverture de la porte puisse bien être mise en oeuvre, par exemple en cas d'urgence, et que les verrous de blocage de sécurité ne viennent pas empêcher une telle ouverture d'urgence. EP 0321994, CN 103879545, EP 3321174, US 2009/23070 divulguent des portes d'aéronef et de véhicule ayant des fonctions de sécurité.

### EXPOSÉ DE L'INVENTION

L'invention a pour but d'améliorer les portes d'aéronef de l'art antérieur.

À cet effet, l'invention vise une porte d'aéronef comportant un encadrement et un ouvrant qui est adapté à occuper une position d'ouverture dans laquelle l'ouvrant est à l'écart de l'encadrement, et une position de fermeture dans laquelle l'ouvrant obture l'encadrement, cette porte d'aéronef comportant :
- un verrou de blocage de sécurité comprenant un premier élément de verrouillage et un deuxième élément de verrouillage complémentaire qui est mobile, le verrou étant adapté à bloquer l'ouvrant dans sa position de fermeture lorsque le deuxième élément de verrouillage mobile est engrené avec le premier élément de verrouillage ;
- une biellette comportant au moins un tronçon de polymère électroactif, cette biellette comportant une première extrémité reliée à un élément de la porte et une deuxième extrémité reliée au deuxième élément de verrouillage mobile, cette biellette étant adaptée à occuper : une position de verrouillage dans laquelle le tronçon de polymère électroactif est sous tension et le deuxième élément de verrouillage mobile est engrené avec le premier élément de verrouillage ; et une position de déverrouillage dans laquelle le tronçon de polymère électroactif est hors tension et le deuxième élément de verrouillage mobile est maintenu à l'écart du premier élément de verrouillage ;
- une unité de commande comportant une alimentation électrique du tronçon de polymère électroactif, cette unité de commande étant adaptée à mettre sous tension le tronçon de polymère électroactif et établir la biellette dans sa position de verrouillage, lorsque la vitesse d'aéronef dépasse un seuil de vitesse prédéterminé.

Selon un autre objet, l'invention vise un procédé de blocage de sécurité d'une porte d'aéronef telle que décrite ci-dessus, et comportant les étapes suivantes :
- mettre hors tension le tronçon de polymère électroactif et établir la biellette dans sa position de déverrouillage lorsque la vitesse de l'aéronef est inférieure au seuil de vitesse prédéterminé ;
- mettre sous tension le tronçon de polymère électroactif et établir la biellette dans sa position de verrouillage lorsque la vitesse de l'aéronef dépasse le seuil de vitesse prédéterminé.

Une telle porte d'aéronef garantit la mise en oeuvre du verrou de blocage de sécurité, lorsque ce dernier est nécessaire, de manière sure et en employant un dispositif peu coûteux, léger, et qui consomme peu d'énergie électrique. La consommation électrique est en effet réduite, car la biellette et plus particulièrement le tronçon de polymère électroactif requiert une faible énergie électrique pour maintenir les éléments de verrouillage engrenés.

La mise en oeuvre du verrou du blocage de sécurité requiert peu de pièces mécaniques en mouvement, gage de fiabilité, car seul le mouvement de la biellette dû au comportement du tronçon de polymère électroactif permet l'engrènement des éléments de verrouillage. Les risques de blocage et d'échauffement sont réduits.

Le verrou de blocage de sécurité et la biellette peuvent être mis en oeuvre dans les températures extrêmes requises par les normes aéronautiques, par exemple de -40°C à +70°C, voire -55°C à +85°C.

Les éléments permettant la mise en oeuvre du verrou de blocage de sécurité sont suffisamment compacts pour s'intégrer facilement dans un mécanisme de porte d'aéronef.

La porte d'aéronef selon l'invention peut comporter les caractéristiques additionnelles suivantes, seules ou en combinaison :
- le tronçon de polymère électroactif comprend un élément élastiquement déformable qui est élastiquement déformé lorsque la biellette est dans sa position de verrouillage, et qui est en position de repos lorsque la biellette est dans sa position de déverrouillage, la biellette étant sollicitée vers sa position de repos par la déformation dudit élément élastiquement déformable ;
- au moins un tronçon de polymère électroactif comporte un polymère électroactif capacitif présentant des propriétés électrostrictives ;
- le polymère électroactif capacitif comporte un empilement d'une pluralité de structures comportant chacune une couche de matériau diélectrique élastiquement déformable pris entre deux couches d'électrodes conductrices ;
- l'unité de commande comporte un voltmètre adapté à mesurer la tension présente aux bornes du tronçon de polymère électroactif, et une table de correspondance des positions de la biellette en fonction de la tension aux bornes du tronçon de polymère électroactif ;
- l'unité de commande comporte un convertisseur de tension adapté à alimenter le tronçon de polymère électroactif selon une tension continue comprise entre 500 V et 5000 V ;
- la biellette présente, dans sa position de verrouillage, une première position fléchie, et présente alternativement, dans sa position de déverrouillage, une deuxième position fléchie dans laquelle le tronçon de polymère électroactif est déformé par rapport à la première position fléchie ;
- l'unité de commande est reliée à un moyen de réception d'une information représentative de la vitesse d'aéronef ;
- l'unité de commande est adaptée à mettre hors tension le tronçon de polymère électroactif et établir la biellette dans sa position de déverrouillage, en cas d'accident ;
- l'unité de commande est reliée à un moyen de réception d'une information relative à un accident d'aéronef.

Le procédé selon l'invention peut comporter les caractéristiques additionnelles suivantes, seules ou en combinaison :
- le procédé comporte en outre l'étape de mettre hors tension le tronçon de polymère électroactif et établir la biellette dans sa position de déverrouillage, en cas d'accident ;
- le procédé comporte en outre l'étape suivante : lorsque la vitesse d'aéronef est supérieure au seuil de vitesse prédéterminé et que l'altitude d'aéronef dépasse un seuil d'altitude prédéterminé, mettre hors tension le tronçon de polymère électroactif et établir la biellette dans sa position de déverrouillage ;
- le procédé comporte en outre l'étape suivante : lorsque la vitesse d'aéronef est supérieure au seuil de vitesse prédéterminé et que l'altitude d'aéronef reviens sous le seuil d'altitude prédéterminé, mettre sous tension le tronçon de polymère électroactif et établir la biellette dans sa position de verrouillage ;
- le procédé comporte une étape de détermination de la position de la biellette par la mesure de la tension aux bornes du tronçon à polymère électroactif.

### PRÉSENTATION DES FIGURES

D'autres caractéristiques et avantages de l'invention ressortiront de la description non limitative qui suit, en référence aux dessins annexés dans lesquels :
- [Fig.1] La figure 1 représente une porte d'aéronef selon l'invention ;
- [Fig.2] La figure 2 illustre schématiquement le verrou de blocage de sécurité de la porte de la figure 1, selon un premier mode de réalisation ;
- [Fig.3] La figure 3 représente en perspective une biellette à polymère électroactif du dispositif de la figure 2 ;
- [Fig.4] La figure 4 représente le tronçon de polymère électroactif de la biellette de la figure 3 ;
- [Fig.5] La figure 5 illustre une portion du tronçon de la figure 4, dans une première position ;
- [Fig.6] La figure 6 illustre la portion de la figure 5 dans une deuxième position ;
- [Fig.7] est une vue similaire à la figure 2 pour un deuxième mode de réalisation.

### DESCRIPTION DÉTAILLÉE

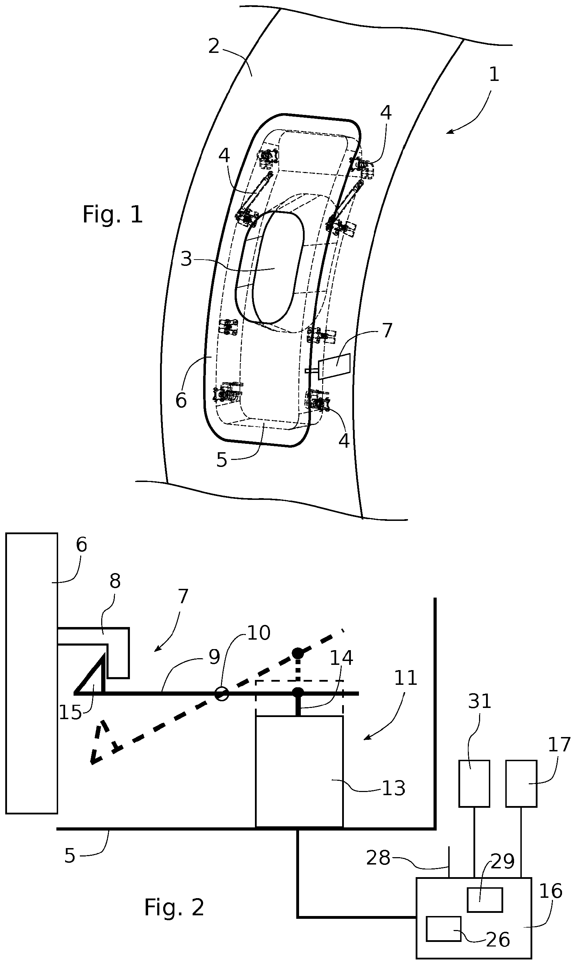

La figure 1 représente schématiquement une porte d'aéronef 1 selon l'invention. Cette porte 1 est mise en place dans un aéronef dont une portion du fuselage 2 est visible. La porte 1 comprend, en plus d'équipements classiques tels qu'un hublot 3, un mécanisme d'ouverture/fermeture 4 (visible en transparence sur la figure 1). Le mécanisme d'ouverture/fermeture 4 peut comporter, selon le type de porte, des charnières, des bras et leviers d'ouverture, des poignées, des butées de verrouillage, etc. Dans le présent exemple, la porte 1 est une porte d'issue de secours. Cependant, la porte selon l'invention peut être mise en oeuvre pour toutes portes au sein de l'aéronef telles que des portes passager, de soute, etc., avec le mécanisme d'ouverture/fermeture adapté.

La porte 1 comprend un encadrement de porte 5 et un ouvrant 6 adapté à occuper : une position de fermeture (celle visible à la figure 1) dans laquelle l'ouvrant 6 obture l'encadrement 5 ; et une position d'ouverture dans laquelle l'ouvrant 6 est à l'écart de l'encadrement 5 et permet l'évacuation de l'aéronef.

En plus du mécanisme d'ouverture/fermeture 4 qui est adapté à verrouiller la porte 1 dans sa position de fermeture, la porte 1 comprend de plus un verrou 7 de blocage de sécurité qui permet de bloquer l'ouvrant 6 dans sa position de fermeture. Ainsi, lorsque le verrou 7 est actif, l'ouverture de la porte est impossible même lorsqu'un utilisateur actionne les moyens de déverrouillage et d'ouverture de la porte 1.

La figure 2 illustre schématiquement le fonctionnement du verrou 7. Sur cette vue schématique, l'ouvrant 6 est vu de profil et comprend un premier élément de verrouillage 8 qui est ici constitué d'une gâche solidaire de la porte 1.

Le verrou 7 comprend de plus un deuxième élément de verrouillage 9 qui est ici constitué d'un levier mobile autour d'un axe de rotation 10. Le deuxième élément de verrouillage 9 comprend à l'une de ses extrémités une dent 15 adaptée à engrener avec le premier élément de verrouillage 8 pour retenir la porte 1 dans sa position de fermeture.

La porte d'aéronef comprend de plus une biellette 11 à polymère électroactif disposée entre le deuxième élément de verrouillage 9 et un autre élément de la porte d'aéronef tel que, dans le présent exemple, l'encadrement 5. Alternativement, la biellette 11 peut être disposée entre le deuxième élément de verrouillage 9 et tout autre élément permettant de retenir l'ouvrant 6 en position de fermeture, par exemple une partie du mécanisme d'ouverture/fermeture 4.

Dans le présent exemple, la biellette 11 comporte un tronçon de polymère électroactif 13 et un tirant 14 relié au tronçon 13. Le tirant 14 raccorde, par exemple par une rotule, la biellette 11 au deuxième élément de verrouillage 9.

La biellette 11 est adaptée à occuper deux positions :
- une position de verrouillage (représentée en trait pleins sur la figure 2) dans laquelle la biellette 11 positionne le deuxième élément de verrouillage 9 de sorte que sa dent 15 vienne s'engager avec le premier élément de verrouillage 8 ;
- une position de déverrouillage (représentée en pointillés sur la figure 2) dans laquelle la biellette 11 positionne le deuxième élément de verrouillage 9 de sorte que sa dent 15 soit à l'écart du premier élément de verrouillage 8.

Lorsque la biellette 11 est dans sa position de verrouillage, la porte 1 est en position de blocage de sécurité et son ouverture est impossible. Lorsque la biellette 11 est dans sa position de déverrouillage, la porte 1 fonctionne normalement et son ouverture est possible lorsqu'un utilisateur actionne des moyens d'ouverture courants ou des moyens d'ouverture de secours.

Un polymère électroactif (« Electroactive polymer », EAP, en anglais) est un polymère dont la forme ou la taille change lorsqu'il est stimulé par un champ électrique. Le tronçon 13 de polymère électroactif comporte des bornes électriques de raccordement permettant sa mise sous tension et la génération de ce champ électrique permettant ce changement de forme ou de taille.

Dans le présent exemple, le tronçon 13 de polymère électroactif présente des propriétés électrostrictives. Ainsi, lorsque ce tronçon 13 de polymère électroactif est mis sous tension, sa longueur diminue. La position déverrouillée de la biellette 11 (en pointillés sur la figure 2) correspond donc à une position de la biellette 11 dans laquelle le tronçon 13 de polymère électroactif est hors tension et présente une longueur maximale, tandis que la position de verrouillage de la biellette 11 (vue en trait plein sur la figure 2) correspond à une position de la biellette 11 dans laquelle le tronçon 13 de polymère électroactif est sous tension et présente une longueur minimale.

La biellette 11 est reliée électriquement à une unité de commande 16 qui est adaptée sélectivement à mettre sous tension et hors tension le tronçon 13 de polymère électroactif de la biellette 11. L'unité de commande 16 comprend ainsi une alimentation électrique adaptée au polymère électroactif constituant le tronçon 13 ainsi que des moyens électroniques de commande permettant l'application de cette tension en fonction de paramètres relevés par l'unité de commande 16. Par exemple, l'unité de commande 16 peut être reliée au réseau de bord de l'aéronef pour recueillir une information représentative de la vitesse de l'aéronef (schématisée par la liaison de l'unité de commande 16 avec un capteur de vitesse 17 sur la figure 2). De plus, l'unité de commande 16 peut être reliée au réseau de bord de l'aéronef pour recueillir une information représentative de l'altitude de l'aéronef (schématisée par la liaison de l'unité de commande 16 avec un capteur d'altitude 31 sur la figure 2).

Dans le présent exemple, l'unité de commande 16 est configurée pour mettre sous tension le tronçon 13 à polymère électroactif, et établir ainsi la biellette 11 dans sa position de verrouillage, lorsque la vitesse d'aéronef dépasse un seuil de vitesse prédéterminé. Lorsque la vitesse d'aéronef est inférieure à ce seuil prédéterminé, l'unité de commande 16 met le tronçon 13 à polymère électroactif hors tension de sorte que la biellette 11 se place dans sa position de déverrouillage. Selon cet exemple, la porte d'aéronef n'est pas verrouillée lorsque l'aéronef est au sol et arrêté, ou roule à basse vitesse sur la piste (l'ouverture de la porte est alors possible pour l'embarquement et le débarquement). Par la suite, lorsque l'aéronef accélère et passe au-delà du seuil de vitesse prédéterminé, en vue de son décollage, la porte bénéficie alors d'un blocage de sécurité réalisé par le verrou 7 de manière à empêcher toute possibilité d'ouverture de porte lorsque l'aéronef roule et que l'altitude n'est pas encore suffisante pour que la pression externe soit à même d'empêcher une ouverture intempestive de la porte.

À l'inverse, lorsque la vitesse d'aéronef revient sous le seuil de vitesse prédéterminé (par exemple lorsque l'aéronef ralentit après avoir atterri), l'unité de commande 16 met le tronçon 13 à polymère électroactif hors tension de sorte que la biellette 11 se place dans sa position de déverrouillage et que la porte est prête à être ouverte lorsque l'aéronef s'immobilisera.

De plus, optionnellement, l'unité de commande 16 peut être configurée pour mettre le tronçon 13 à polymère électroactif hors tension de sorte que la biellette 11 se place dans sa position de déverrouillage, lorsque la vitesse d'aéronef a dépassé le seuil de vitesse prédéterminé et que, en plus, l'aéronef a dépassé un seuil d'altitude prédéterminé. Cette situation correspond au cas où, après avoir décollé, l'aéronef atteint une altitude (correspondant au seuil d'altitude prédéterminé) à partir de laquelle la différence de pression entre l'intérieur et l'extérieur de l'aéronef exerce une forte contrainte sur les moyens de verrouillage de la porte, et empêche ainsi l'ouverture de la porte indépendamment du verrou de blocage de sécurité. Ce dernier est donc superflu dans cette situation d'altitude, et peut être désactivé.

Selon cette option, lorsque, à l'inverse, l'aéronef repasse sous le seuil d'altitude prédéterminé, le verrou de blocage de sécurité est à nouveau activé par l'action de l'unité de commande 16 qui met sous tension le tronçon 13 à polymère électroactif, et établit ainsi la biellette 11 dans sa position de verrouillage. Le verrou de blocage ne sera à nouveau désactivé que lorsque la vitesse d'aéronef, après atterrissage, repassera sous le seuil de vitesse prédéterminé comme exposé précédemment.

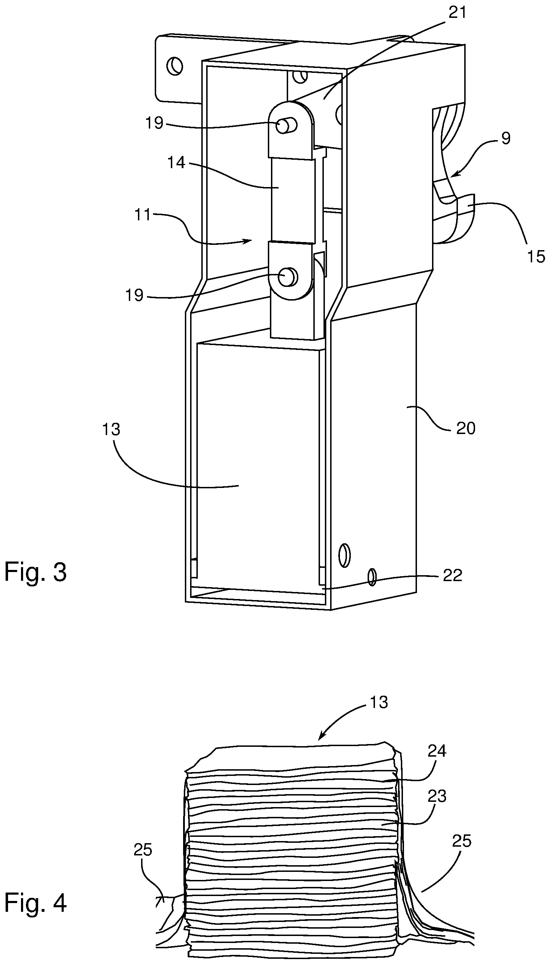

La figure 3 illustre en perspective un exemple de réalisation de l'ensemble formé par la biellette 11 et le deuxième élément de verrouillage 9. Selon cet exemple, la biellette 11 comporte un tronçon 13 de polymère électroactif de forme parallélépipédique et le tirant 14 est muni d'une liaison pivot 19 à chacune de ses extrémités. La biellette 11 est montée dans un châssis 20 qui est fixé, par exemple, sur l'encadrement de porte 5. Sur la figure 3, la biellette 11 est dans sa position de déverrouillage.

Le deuxième élément de verrouillage 9 mobile est ici constitué d'une équerre 21 munie à son extrémité de la dent 15 adaptée à engrener avec le premier élément de verrouillage 8 (non représenté sur cette figure 3). Le deuxième élément de verrouillage 9 est monté pivotant sur le châssis 20 et est relié à la biellette 11 par une liaison pivot 19.

La biellette 11 comporte, au niveau du tronçon 13 de polymère électroactif, une collerette 22 permettant de maintenir la biellette 11 par rapport au châssis 20 lorsque le tronçon 13 de polymère électroactif est mis sous tension et que la biellette 11 occupe ainsi sa position de verrouillage.

Pour que la biellette 11 passe à sa position de verrouillage, le tronçon 13 de polymère électroactif est mis sous tension, ce qui a pour conséquence de réduire sa hauteur (selon l'orientation visible à la figure 3), de sorte que la biellette 11 exerce une traction sur le deuxième élément de verrouillage 9, provocant la rotation de l'équerre 21 et l'engagement de la dent 15 avec le premier élément de verrouillage 8 (non représenté sur cette figure 3).

La figure 4 illustre un exemple de réalisation du tronçon 13 de polymère électroactif de la biellette 11 de la figure 3. Selon cet exemple, le tronçon 13 à polymère électroactif est constitué d'un polymère électroactif capacitif (les polymères électroactifs capacitifs sont également dénommés « polymères électroactifs diélectriques »). Dans ce type de polymère électroactif, la déformation est obtenue par la force de Coulomb. Les polymères électroactifs capacitifs, sont des matériaux dans lesquels la variation de forme ou de taille est provoquée par des forces électrostatiques entre deux électrodes qui pressent un polymère qui peut se comprimer en épaisseur.

Le tronçon 13 de polymère électroactif capacitif de la figure 4 est ici constitué d'un empilement alterné de couches d'un élément élastiquement déformable constitué ici d'un polymère diélectrique 23, et de couches d'électrodes conductrices 24. Les couches d'électrodes conductrices 24 sont reliées à des nattes conductrices 25 regroupées en faisceaux et reliées à l'unité de commande 16 en vue de mettre sous tension les électrodes conductrices 24.

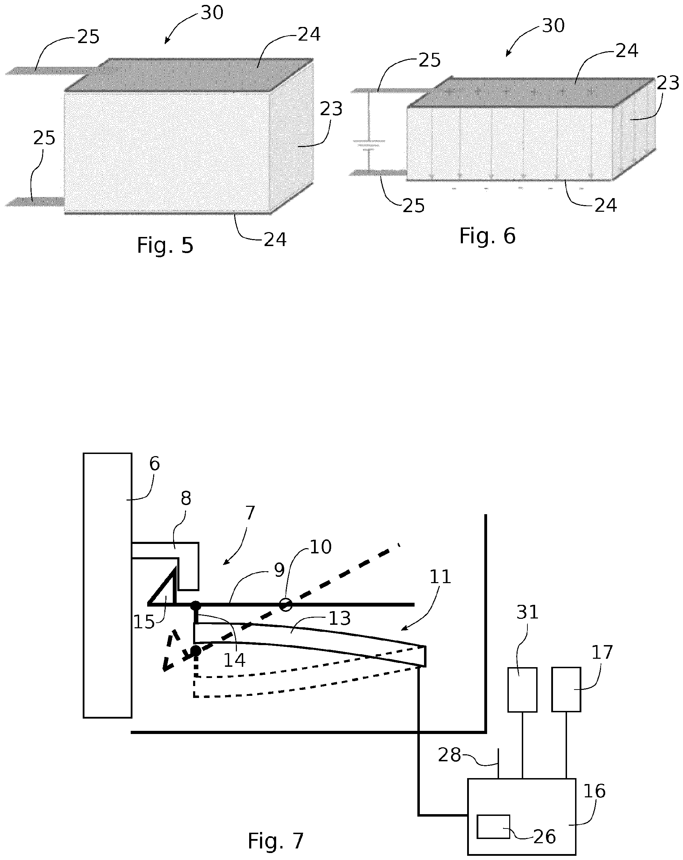

Les figures 5 et 6 illustrent schématiquement la structure et le comportement des empilements représentés à la figure 4. Les figures 5 et 6 représentent une structure élémentaire 30 formée d'un polymère diélectrique 23 (par exemple un élastomère) maintenu entre deux couches d'électrodes conductrices 24 qui sont chacune reliées à une natte conductrice 25. Lorsque le polymère électroactif capacitif est hors tension, toutes les structures élémentaires 30 présentent la configuration illustrée à la figure 5.

La figure 6 représente le polymère électroactif de la figure 5 lorsqu'il a été mis sous tension, c'est-à-dire lorsqu'une tension continue a été appliquée entre les nattes conductrices 25. Une pression électrostatique apparait aux bornes des électrodes 24 qui se rapprochent alors l'une de l'autre en comprimant le polymère diélectrique 23. Aucun courant ne circule entre les deux électrodes 24 (à part un éventuel courant de fuite) tandis que ces dernières sont chargées respectivement positivement et négativement. Une réduction de la hauteur du montage est ainsi obtenue dans la configuration de la figure 6.

Le tronçon 13 de polymère électroactif, qui dans cet exemple est capacitif, est constitué d'un empilement de ces structures élémentaires 30 et se comporte comme illustré aux figures 5 et 6. Une importante réduction de la hauteur du tronçon 13 est obtenue lorsque toutes les couches de polymère conducteur 24 sont mises sous tensions deux à deux, cette réduction de hauteur étant calibrée (par le choix du nombre de structures élémentaires 30, notamment) pour déplacer le deuxième élément de verrouillage 9 jusqu'à l'engrènement de la dent 15.

Lorsque le tronçon 13 de polymère électroactif n'est plus sous tension, l'énergie de déformation élastique qui est contenue dans ce tronçon 13 est utilisée pour mettre en mouvement la biellette 11 vers sa position de déverrouillage et garantir ainsi le déverrouillage du dispositif en cas de mise hors tension volontaire du tronçon 13 (suite à une commande), ou en cas de perte involontaire d'alimentation électrique, lors d'un accident par exemple.

À cet effet, le tronçon 13 de polymère électroactif présente une position de repos (lorsqu'il n'est pas sous tension) correspondant à sa position de déverrouillage. Sa position de verrouillage, lorsqu'il est sous tension, implique une déformation élastique du polymère électroactif qui emmagasine suffisamment d'énergie pour permettre un retour à la position de déverrouillage dès qu'il n'est plus sous tension, quelle que soit l'origine de cette déconnexion (volontaire par l'action de l'unité de commande 16 ou suite à un accident).

Dans cet exemple, le tronçon 13 de polymère électroactif capacitif est alimenté sous une forte tension, de préférence de 0,5 à 5 kV mais présente l'avantage d'une consommation électrique quasi-nulle. L'unité de commande 16 comporte à cet effet un convertisseur continu-continu 26 (ou tout autre élément de conversion de tension) permettant de transformer la tension disponible dans un aéronef (en général : 28 V continu) en une tension continue dans la plage de 500 V à 5 000 V, et formant une alimentation électrique pour la mise sous tension du tronçon 13 de polymère électroactif.

Dans ce premier mode de réalisation, le tronçon 13 de polymère électroactif se comporte comme un condensateur de capacité variable, et la tension qui apparait aux bornes du tronçon 13 est représentative de la position (comprimée ou non) du tronçon 13. L'unité de commande 16 comporte un voltmètre 29 (ou tout autre moyen de mesure ou d'estimation de tension) permettant de mesurer la tension qui apparait aux bornes du tronçon 13, indépendamment de la tension délivrée par l'alimentation 26. Le voltmètre 29 indiquera une tension mesurée aux bornes du tronçon 13 pour la biellette 11 dans sa position de verrouillage qui sera différente de la tension pour la biellette 11 dans sa position de déverrouillage. L'unité de commande 16 peut ainsi déterminer, à partir de la tension mesurée par le voltmètre 29, la position de biellette 11 (verrouillée ou déverrouillée) grâce, par exemple, à une table de correspondance des positions du verrou 7 en fonction de la tension mesurée aux bornes de la biellette 11 à polymère électroactif. La sureté de fonctionnement est ainsi améliorée pour la porte d'aéronef qui dispose ainsi d'une mesure de l'état de la biellette 11 sans faire appel à un capteur de position et sans éléments mécaniques.

La figure 7 illustre un deuxième mode de réalisation de l'invention, dans lequel le deuxième élément de verrouillage 9 comporte un tronçon 13 de polymère électroactif adapté à fléchir lorsqu'il est sous tension. La figure 7 porte les mêmes numéros de renvoi pour les éléments communs avec le premier mode de réalisation.

Sur la figure 7, la position de verrouillage de la biellette 11 est représentée en traits pleins tandis que sa position de déverrouillage est représentée en pointillés. Dans cet exemple, la biellette 11 comporte une tige fléchissante constituée d'un tronçon 13 de polymère électroactif, et un tirant 14 de rattachement au deuxième élément de verrouillage 9. Le tronçon 13 de polymère électroactif est par exemple ici constitué d'un polymère électroactif ionique, qui constitue également un élément élastiquement déformable. Ce type de polymère électroactif permet, dans cette configuration, une mise en place du deuxième élément de verrouillage 9 dans l'une ou l'autre de ses positions représentées respectivement en traits pleins et en pointillés sur la figure 7.

L'unité de commande 16 est actionnée de la même manière que le premier mode de réalisation, en mettant sous tension ou hors tension le tronçon 13. La biellette 11 est ainsi adaptée, de même, à occuper deux positions :
- une position de verrouillage (représentée en trait pleins sur la figure 7) dans laquelle la biellette 11 positionne le deuxième élément de verrouillage 9 de sorte que sa dent 15 vienne s'engrener avec le premier élément de verrouillage 8 ;
- une position de déverrouillage (représentée en pointillés sur la figure 7) dans laquelle la biellette 11 positionne le deuxième élément de verrouillage 9 de sorte que sa dent 15 soit à l'écart du premier élément de verrouillage 8.

Le tronçon 13 de polymère électroactif étant ici constitué d'un polymère électroactif ionique, le convertisseur 26 sera dans ce cas un convertisseur abaisseur de tension, car ce type de polymère requiert généralement une faible tension pour être mis en mouvement.

Dans le premier mode de réalisation et dans le deuxième mode de réalisation, l'unité de commande 16 peut être mise en oeuvre selon un procédé permettant le blocage de sécurité de la porte d'aéronef. Ce procédé comporte les étapes suivantes :
- mettre sous tension le tronçon 13 de polymère électroactif et établir la biellette 11 dans sa position de verrouillage lorsque la vitesse de l'aéronef est supérieure au seuil de vitesse prédéterminé ;
- mettre hors tension le tronçon 13 de polymère électroactif et établir la biellette 11 dans sa position de déverrouillage lorsque la vitesse de l'aéronef est inférieure au seuil de vitesse prédéterminé.

Ainsi, lorsque l'aéronef avance à faible vitesse, à l'atterrissage ou au décollage, et que l'ouverture de la porte est théoriquement possible, le verrou 7 assure alors un blocage de sécurité de la porte 1. Cependant, si un accident a lieu, l'une ou l'autre des configurations suivantes se produit alors :
- l'accident provoque une coupure de courant dans l'aéronef et le tronçon 13 de polymère électroactif est de fait mis hors tension, provocant un passage de la biellette 11 en position de déverrouillage, ce qui permet alors l'ouverture d'urgence de la porte grâce au mécanisme d'ouverture ;
- l'accident ne provoque pas une coupure de courant dans l'aéronef et l'unité de commande 16 va dans ce cas mettre hors tension le tronçon 13 de polymère électroactif de sorte que, de même que précédemment, la biellette 11 passe dans sa position de déverrouillage et l'ouverture d'urgence est permise. Dans ce cas, l'unité de commande 16 est avantageusement munie d'une liaison 28 reliée à des capteurs, au réseau de bord de l'aéronef, ou tout autre moyen permettant à l'unité de commande 16 d'obtenir une information indiquant la survenance d'un accident.

Des variantes de réalisation de la porte d'aéronef et de son procédé de mise en oeuvre peuvent être prévues sans sortir du cadre de l'invention. Notamment, le verrou de blocage de sécurité peut être disposé aussi bien entre l'encadrement de porte et l'ouvrant qu'au sein même du mécanisme d'ouverture/fermeture, et ce dans toute position permettant le blocage de l'ouverture de la porte.

Par ailleurs, la biellette 11 peut comporter aussi bien un seul tronçon 13 de polymère électroactif que plusieurs tronçons de polymère électroactif.

## Revendications

1. Porte d'aéronef (1) comportant un encadrement (5) et un ouvrant (6) qui est adapté à occuper une position d'ouverture dans laquelle l'ouvrant (6) est à l'écart de l'encadrement (5), et une position de fermeture dans laquelle l'ouvrant (6) obture l'encadrement (5), cette porte d'aéronef comprenant:
- un verrou (7) de blocage de sécurité comprenant un premier élément de verrouillage (8) et un deuxième élément de verrouillage (9) complémentaire qui est mobile, le verrou (7) étant adapté à bloquer l'ouvrant (6) dans sa position de fermeture lorsque le deuxième élément de verrouillage mobile (9) est engrené avec le premier élément de verrouillage (8) ; cette porte d'aéronef étant **caractérisée en ce qu'**elle comprend:
- une biellette (11) comportant au moins un tronçon (13) de polymère électroactif, cette biellette (11) comportant une première extrémité reliée à un élément de la porte et une deuxième extrémité reliée au deuxième élément de verrouillage mobile (9), cette biellette (11) étant adaptée à occuper : une position de verrouillage dans laquelle le tronçon (13) de polymère électroactif est sous tension et le deuxième élément de verrouillage mobile (9) est engrené avec le premier élément de verrouillage (8) ; et une position de déverrouillage dans laquelle le tronçon (13) de polymère électroactif est hors tension et le deuxième élément de verrouillage mobile (9) est maintenu à l'écart du premier élément de verrouillage (8) ;
- une unité de commande (16) comportant une alimentation électrique (26) du tronçon (13) de polymère électroactif, cette unité de commande (16) étant adaptée à mettre sous tension le tronçon (13) de polymère électroactif et établir la biellette (11) dans sa position de verrouillage, lorsque la vitesse d'aéronef dépasse un seuil de vitesse prédéterminé.

2. Porte d'aéronef selon la revendication 1, dans laquelle le tronçon (13) de polymère électroactif comprend un élément élastiquement déformable qui est élastiquement déformé lorsque la biellette (11) est dans sa position de verrouillage et qui est en position de repos lorsque la biellette (11) est dans sa position de déverrouillage, la biellette (11) étant sollicitée vers sa position de repos par la déformation dudit élément élastiquement déformable.

3. Porte d'aéronef selon la revendication 2, dans laquelle au moins un tronçon (13) de polymère électroactif comporte un polymère électroactif capacitif présentant des propriétés électrostrictives.

4. Porte d'aéronef selon la revendication 3, dans laquelle le polymère électroactif capacitif comporte un empilement d'une pluralité de structures (30) comportant chacune une couche de matériau diélectrique élastiquement déformable (23) pris entre deux couches d'électrodes conductrices (24).

5. Porte d'aéronef selon l'une des revendications 3 ou 4, dans laquelle l'unité de commande (16) comporte un voltmètre (29) adapté à mesurer la tension présente aux bornes du tronçon (13) de polymère électroactif, et une table de correspondance des positions de la biellette (11) en fonction de la tension aux bornes du tronçon de polymère électroactif.

6. Porte d'aéronef selon l'une des revendications précédentes, dans laquelle de commande (16) comporte un convertisseur de tension (26) adapté à alimenter le tronçon (13) de polymère électroactif selon une tension continue comprise entre 500 V et 5 000 V.

7. Porte d'aéronef selon la revendication 2, dans laquelle la biellette (11) présente, dans sa position de verrouillage, une première position fléchie, et présente alternativement, dans sa position de déverrouillage, une deuxième position fléchie dans laquelle le tronçon (13) de polymère électroactif est déformé par rapport à la première position fléchie.

8. Porte d'aéronef selon l'une des revendications précédentes, dans laquelle l'unité de commande (16) est reliée à un moyen (17) de réception d'une information représentative de la vitesse d'aéronef.

9. Porte d'aéronef selon l'une des revendications précédentes, dans laquelle l'unité de commande (16) est adaptée à mettre hors tension le tronçon (13) de polymère électroactif et établir la biellette (11) dans sa position de déverrouillage, en cas d'accident.

10. Porte d'aéronef selon l'une des revendications précédentes, dans laquelle l'unité de commande (16) est reliée à un moyen (28) de réception d'une information relative à un accident d'aéronef.

11. Procédé de blocage de sécurité d'une porte d'aéronef (1) conforme à l'une des revendications précédentes, ce procédé étant **caractérisé en ce qu'**il comporte les étapes suivantes :
- mettre hors tension le tronçon (13) de polymère électroactif et établir la biellette (11) dans sa position de déverrouillage lorsque la vitesse de l'aéronef est inférieure au seuil de vitesse prédéterminé ;
- mettre sous tension le tronçon (13) de polymère électroactif et établir la biellette (11) dans sa position de verrouillage lorsque la vitesse de l'aéronef dépasse le seuil de vitesse prédéterminé.

12. Procédé selon la revendication 11, qui comporte en outre l'étape de mettre hors tension le tronçon (13) de polymère électroactif et établir la biellette (11) dans sa position de déverrouillage, en cas d'accident.

13. Procédé selon l'une des revendications 11 ou 12, qui comporte en outre l'étape suivante :
- lorsque la vitesse d'aéronef est supérieure au seuil de vitesse prédéterminé et que l'altitude d'aéronef dépasse un seuil d'altitude prédéterminé, mettre hors tension le tronçon (13) de polymère électroactif et établir la biellette (11) dans sa position de déverrouillage.

14. Procédé selon la revendication 13, qui comporte en outre l'étape suivante :
- lorsque la vitesse d'aéronef est supérieure au seuil de vitesse prédéterminé et que l'altitude d'aéronef revient sous le seuil d'altitude prédéterminé, mettre sous tension le tronçon (13) de polymère électroactif et établir la biellette (11) dans sa position de verrouillage.

15. Procédé de blocage de sécurité selon l'une des revendications 11 à 14 d'une porte d'aéronef conforme à la revendication 5, qui comporte une étape de détermination de la position de la biellette (11) par la mesure de la tension aux bornes du tronçon (13) à polymère électroactif.

## Patentansprüche

1. Luftfahrzeugtür (1) mit einem Rahmen (5) und einem Öffnungselement (6), das geeignet ist, eine Öffnungsposition, in der sich das Öffnungselement (6) abseits des Rahmens (5) befindet, und einer Schließposition, in der das Öffnungselement (6) den Rahmen (5) verschließt, einzunehmen, wobei diese Luftfahrzeugtür Folgendes umfasst:
- eine Sicherheitsblockierverriegelung (7), die ein erstes Verriegelungselement (8) und ein zweites, komplementäres Verriegelungselement (9), das beweglich ist, umfasst, wobei die Verriegelung (7) geeignet ist, das Öffnungselement (6) in seiner Schließposition zu blockieren, wenn das zweite, bewegliche Verriegelungselement (9) mit dem ersten Verriegelungselement (8) in Eingriff steht; wobei diese Luftfahrzeugtür **dadurch gekennzeichnet ist, dass** sie Folgendes umfasst:
- eine Stange (11) mit wenigstens einem Abschnitt (13) aus elektroaktivem Polymer, wobei diese Stange (11) ein erstes Ende, das mit einem Element der Tür verbunden ist, und ein zweites Ende, das mit dem zweiten, beweglichen Verriegelungselement (9) verbunden ist, beinhaltet, wobei diese Stange (11) geeignet ist, folgende Positionen einzunehmen:eine Verriegelungsposition, in der der Abschnitt (13) aus elektroaktivem Polymer unter Spannung steht und das zweite, bewegliche Verriegelungselement (9) mit dem ersten Verriegelungselement (8) in Eingriff steht; und eine Entriegelungsposition, in der der Abschnitt (13) aus elektroaktivem Polymer spannungsfrei ist und das zweite, bewegliche Verriegelungselement (9) abseits des ersten Verriegelungselements (8) gehalten wird;
- eine Steuereinheit (16) mit einer Stromversorgung (26) des Abschnitts (13) aus elektroaktivem Polymer, wobei diese Steuereinheit (16) geeignet ist, den Abschnitt (13) aus elektroaktivem Polymer unter Spannung zu setzen und die Stange (11) in ihre Verriegelungsposition zu stellen, wenn die Luftfahrzeuggeschwindigkeit eine vorbestimmte Geschwindigkeitsschwelle überschreitet.

2. Luftfahrzeugtür nach Anspruch 1, wobei der Abschnitt (13) aus elektroaktivem Polymer ein elastisch verformbares Element umfasst, das elastisch verformt ist, wenn sich die Stange (11) in ihrer Verriegelungsposition befindet, und die sich in Ruheposition befindet, wenn sich die Stange (11) in ihrer Entriegelungsposition befindet, wobei die Stange (11) durch die Verformung des elastisch verformbaren Elements zu ihrer Ruheposition vorgespannt wird.

3. Luftfahrzeugtür nach Anspruch 2, wobei wenigstens ein Abschnitt (13) aus elektroaktivem Polymer ein kapazitives elektroaktives Polymer mit elektrostriktiven Eigenschaften beinhaltet.

4. Luftfahrzeugtür nach Anspruch 3, wobei das kapazitive elektroaktive Polymer einen Stapel aus einer Mehrzahl von Strukturen (30) beinhaltet, die jeweils eine Schicht aus elastisch verformbarem dielektrischen Material (23) beinhalten, die zwischen zwei Schichten aus leitenden Elektroden (24) angeordnet ist.

5. Luftfahrzeugtür nach einem der Ansprüche 3 oder 4, wobei die Steuereinheit (16) einen Spannungsmesser (29), der geeignet ist, die Spannung zu messen, die an den Anschlüssen des Abschnitts (13) aus elektroaktivem Polymer anliegt, und eine Entsprechungstabelle der Positionen der Stange (11) je nach der Spannung an den Anschlüssen des Abschnitts aus elektroaktivem Polymer beinhaltet.

6. Luftfahrzeugtür nach einem der vorhergehenden Ansprüche, wobei die Steuerung (16) einen Spannungswandler (26) beinhaltet, der geeignet ist, den Abschnitt (13) aus elektroaktivem Polymer mit einer Gleichspannung zwischen 500 V und 5000 V zu versorgen.

7. Luftfahrzeugtür nach Anspruch 2, wobei die Stange (11) in ihrer Verriegelungsposition eine erste gebogene Position aufweist und alternativ in ihrer Entriegelungsposition eine zweite gebogene Position aufweist, in der der Abschnitt (13) aus elektroaktivem Polymer im Verhältnis zur ersten gebogenen Position verformt ist.

8. Luftfahrzeugtür nach einem der vorhergehenden Ansprüche, wobei die Steuereinheit (16) mit einem Mittel (17) zum Empfang einer Information, die für die Luftfahrzeuggeschwindigkeit repräsentativ ist, verbunden ist.

9. Luftfahrzeugtür nach einem der vorhergehenden Ansprüche, wobei die Steuereinheit (16) geeignet ist, bei einem Unfall den Abschnitt (13) aus elektroaktivem Polymer spannungsfrei zu schalten und die Stange (11) in ihre Entriegelungsposition zu stellen.

10. Luftfahrzeugtür nach einem der vorhergehenden Ansprüche, wobei die Steuereinheit (16) mit einem Mittel (28) zum Empfang einer Information in Bezug auf einen Luftfahrzeugunfall verbunden ist.

11. Verfahren zur Sicherheitsblockierung einer Luftfahrzeugtür (1) nach einem der vorhergehenden Ansprüche, wobei dieses Verfahren **dadurch gekennzeichnet, dass** es die folgenden Schritte beinhaltet:
- Spannungsfreischalten des Abschnitts (13) aus elektroaktivem Polymer und Stellen der Stange (11) in ihre Entriegelungsposition, wenn die Geschwindigkeit des Luftfahrzeugs kleiner als die vorbestimmte Geschwindigkeitsschwelle ist;
- Unterspannungsetzen des Abschnitts (13) aus elektroaktivem Polymer und Stellen der Stange (11) in ihre Verriegelungsposition, wenn die Geschwindigkeit des Luftfahrzeugs die vorbestimmte Geschwindigkeitsschwelle überschreitet.

12. Verfahren nach Anspruch 11, das ferner den Schritt des Spannungsfreischaltens des Abschnitts (13) aus elektroaktivem Polymer und Stellens der Stange (11) in ihre Entriegelungsposition bei einem Unfall beinhaltet.

13. Verfahren nach einem der Ansprüche 11 oder 12, das ferner den folgenden Schritt beinhaltet:
- wenn die Luftfahrzeuggeschwindigkeit größer als die vorbestimmte Geschwindigkeitsschwelle ist und die Luftfahrzeugflughöhe eine vorbestimmte Flughöhenschwelle überschreitet, Spannungsfreischalten des Abschnitts (13) aus elektroaktivem Polymer und Stellen der Stange (11) in ihre Entriegelungsposition.

14. Verfahren nach Anspruch 13, das ferner den folgenden Schritt beinhaltet:
- wenn die Luftfahrzeuggeschwindigkeit größer als die vorbestimmte Geschwindigkeitsschwelle ist und die Luftfahrzeugflughöhe die vorbestimmte Flughöhenschwelle wieder unterschreitet, Unterspannungsetzen des Abschnitts (13) aus elektroaktivem Polymer und Stellen der Stange (11) in ihre Verriegelungsposition.

15. Verfahren zur Sicherheitsblockierung nach einem der Ansprüche 11 bis 14 einer Luftfahrzeugtür nach Anspruch 5, das einen Schritt des Bestimmens der Position der Stange (11) durch die Messung der Spannung an den Anschlüssen des Abschnitts (13) aus elektroaktivem Polymer beinhaltet.

## Claims

1. An aircraft door (1) comprising a frame (5) and a leaf (6) which is adapted to take up an open position in which the leaf (6) is at a distance from the frame (5), and a closed position in which the leaf (6) closes off the frame (5), this aircraft door comprising:
- a safety latch (7) comprising a first locking element (8) and a complementary second locking element (9) which is movable, the latch (7) being adapted to lock the leaf (6) in its closed position when the movable second locking element (9) is engaged with the first locking element (8); this aircraft door being **characterized in that** it comprises:
- a link (11) comprising at least one electroactive polymer portion (13), this link (11) comprising a first end connected to an element of the door and a second end connected to the movable second locking element (9), this link (11) being adapted to take up: a lock position in which the electroactive polymer portion (13) is supplied with power and the movable second locking element (9) is engaged with the first locking element (8); and an unlock position in which the electroactive polymer portion (13) is not supplied with power and the movable second locking element (9) is kept away from the first locking element (8);
- a control unit (16) comprising a power supply (26) for the electroactive polymer portion (13), this control unit (16) being adapted to supply power to the electroactive polymer portion (13) and place the link (11) in its lock position, when the aircraft speed exceeds a predetermined speed threshold.

2. The aircraft door as claimed in claim 1, in which the electroactive polymer portion (13) comprises an elastically deformable element which is elastically deformed when the link (11) is in its lock position, and which is in the rest position when the link (11) is in its unlock position, the link (11) being urged into its rest position by the deformation of said elastically deformable element.

3. The aircraft door as claimed in claim 2, in which at least one electroactive polymer portion (13) comprises a capacitive electroactive polymer having electrostrictive properties.

4. The aircraft door as claimed in claim 3, in which the capacitive electroactive polymer comprises a stack of a plurality of structures (30) each comprising a layer of elastically deformable dielectric material (23) sandwiched between two layers of conductive electrodes (24).

5. The aircraft door as claimed in either of claims 3 or 4, in which the control unit (16) comprises a voltmeter (29) adapted to measure the voltage present at the terminals of the electroactive polymer portion (13), and a correspondence table correlating the positions of the link (11) with the voltage at the terminals of the electroactive polymer portion.

6. The aircraft door as claimed in one of the preceding claims, in which the control unit (16) comprises a voltage converter (26) adapted to supply the electroactive polymer portion (13) with to a DC voltage of between 500 V and 5000 V.

7. The aircraft door as claimed in claim 2, in which the link (11) has, in its lock position, a first bent position, and alternatively has, in its unlock position, a second bent position in which the electroactive polymer portion (13) is deformed with respect to the first bent position.

8. The aircraft door as claimed in one of the preceding claims, in which the control unit (16) is connected to a means (17) for receiving information representative of the speed of the aircraft.

9. The aircraft door as claimed in one of the preceding claims, in which the control unit (16) is adapted to interrupt the power supply to the electroactive polymer portion (13) and place the link (11) in its unlock position, in the event of an accident.

10. The aircraft door as claimed in one of the preceding claims, in which the control unit (16) is connected to a means (28) for receiving information relating to an aircraft accident.

11. A method for the safety locking of an aircraft door (1) as claimed in one of the preceding claims, this method being in which it comprises the following steps:
- interrupting the power supply to the electroactive polymer portion (13) and placing the link (11) in its unlock position when the speed of the aircraft is below the predetermined speed threshold;
- supplying power to the electroactive polymer portion (13) and placing the link (11) in its lock position when the speed of the aircraft exceeds the predetermined speed threshold.

12. The method as claimed in claim 11, which further comprises the step of interrupting the power supply to the electroactive polymer portion (13) and placing the link (11) in its unlock position, in the event of an accident.

13. The method as claimed in either of claims 11 or 12, which further comprises the following step:
- when the aircraft speed is above the predetermined speed threshold and the aircraft altitude exceeds a predetermined altitude threshold, interrupting the power supply to the electroactive polymer portion (13) and placing the link (11) in its unlock position.

14. The method as claimed in claim 13, which further comprises the following step:
- when the aircraft speed is above the predetermined speed threshold and the aircraft altitude returns to below the predetermined altitude threshold, supplying power to the electroactive polymer portion (13) and placing the link (11) in its lock position.

15. The method as claimed in one of claims 11 to 14 for safety locking of an aircraft door as claimed in claim 5, which comprises a step of determining the position of the link (11) by measuring the voltage at the terminals of the electroactive polymer portion (13).
